# EUROPÄISCHE PATENTSCHRIFT

(11) **EP 2 316 690 B1**
(45) Veröffentlichungstag und Bekanntmachung des Hinweises auf die Patenterteilung: **16.03.2016**
(21) Anmeldenummer: 10005791.8
(22) Anmeldetag: 04.06.2010
(51) Int. Cl.: B60N 2/44, B60N 3/00, B60N 2/46

(54) **Ausstattungsteil für Kraftfahrzeuge**
Fitting piece for motor vehicles
Pièce d'équipement pour véhicules automobiles

(30) Priorität: 30.10.2009 DE 202009014712 U
(43) Veröffentlichungstag der Anmeldung: 04.05.2011
(73) Patentinhaber: KDK Automotive GmbH, 63607 Wächtersbach (DE)
(72) Erfinder: Middel, Dietmar, 57462 Olpe (DE)
(74) Vertreter: Köchling, Conrad-Joachim

(56) Entgegenhaltungen:
- DE-A1-102005 060 196
- US-A- 3 807 799
- US-A1- 2004 135 419

## Beschreibung

Die Erfindung betrifft ein Ausstattungsteil für Kraftfahrzeuge mit mindestens einem gestellfest angeordneten Stützteil, an dem ein Träger des Ausstattungsteils schwenkbeweglich gehalten ist, wobei der Träger endseitig eine gelochte Lagerlasche aus einem Materialstreifen aufweist. Ein derartiges Ausstattungsteil ist beispielsweise aus der DE 10 2005 060 196 A1 bekannt.

Ein solches Ausstattungsteil kann beispielsweise ein schwenkbarer Ablagetisch oder eine schwenkbare Armlehne sein.

Bekannt sind Ausstattungsteile in Form von Mittelarmlehnen, die ergonomisch gestaltete Polster aufweisen, auf denen der Fahrer oder Beifahrer seinen Arm ablegen kann. Unterhalb der Mittelarmlehne befindet sich gegebenenfalls ein Ablagefach, um Gegenstände ablegen zu können.

Das Ablagefach wird durch die abgeschwenkte Mittelarmlehne abgedeckt. In der hoch geschwenkten Lage ist das Ablagefach freigegeben und die Mittelarmlehne befindet sich zwischen den Rückenlehnen der Sitze für Fahrer und Beifahrer. Um eine entsprechende Betätigung zu erreichen, ist das Ausstattungsteil um eine Achse schwenkbar gelagert, wobei gegebenenfalls die Drehbewegung gebremst ist, insbesondere beim Abschwenken des Ausstattungsteils.

Ausgehend von diesem Stand der Technik liegt der Erfindung die Aufgabe zugrunde, eine Drehlagerung des Ausstattungsteils bei gleichzeitiger Abbremsung der Schwenkbewegung mit möglichst geringem Aufwand an Teilen zu realisieren.

Zur Lösung dieser Aufgabe schlägt die Erfindung vor, dass auf die Lagerlasche ein gelochter Clip aus Kunststoff aufgesteckt ist, der mit je einer Reibfläche an den gegenüberliegenden Seitenflächen der Lagerlasche anliegt und der einen randoffenen Schlitz mindestens im Schwenkbereich der Lagerlasche aufweist, dass eine Hülse als Befestigungsmittel vorgesehen ist, die mit ihrem Schaft die Lochungen der Lagerlasche und des Clips sowie eine Lochung des Stützteiles durchgreift und in Montagesolllage unverlierbar am Stützteil gehalten ist, wobei sich ein Kragen der Hülse an einer gelochten Federscheibe abstützt, die von der Hülse durchgriffen ist und sich an der dem Stützteil abgewandten Seitenfläche des Clips abstützt, wobei die andere, gegenüberliegende Seitenfläche des Clips an einer Seitenfläche des Stützteils anliegt, und dass der Clip gegenüber dem Stützteil um die durch die Hülse gebildete Achse unverdrehbar angeordnet ist.

Erfindungsgemäß können jeweils ein Stützteil und ein Träger für ein Ausstattungsteil vorgesehen sein. Solche Teile, also Stützteil und Träger, können auch paarweise angeordnet sein und in gleicher Weise ausgebildet sein.

Die am Träger angeordnete Lagerlasche und das Stützteil sind gelocht, wobei die Drehachse durch eine die Lochungen durchsetzende Hülse gebildet ist. Auf der gelochten Lagerlasche befindet sich ein ebenfalls gelochter Clip aus Kunststoff, der ebenfalls von der Hülse durchgriffen ist. Der Clip besitzt Reibflächen, die an den beiden gegenüberliegenden Seitenflächen der Lagerlasche anliegen, wobei der Clip zudem einen randoffenen Schlitz aufweist, so dass die Lagerlasche gegenüber dem Clip schwenkbar ist. Ein Kragen der Hülse stützt sich an einer gelochten Federscheibe ab, die ebenfalls von der Hülse durchgriffen ist und die sich mit der dem Kragen abgewandten Seitenfläche an der dem Stützteil abgewandten Seitenfläche des Clips abstützt (federnd). Die andere Seitenfläche des Clips liegt an einer Seitenfläche des Stützteiles an. Der Clip selbst ist gegenüber dem Stützteil um die durch die Hülse gebildete Achse unverdrehbar gehalten.

Durch diese Anordnung wird eine entsprechende Bewegungsmöglichkeit des Ausstattungsteiles erreicht, wobei die Bewegung gebremst ist, weil die Federscheibe sich an der einen Seitenfläche des Clips abstützt und diese Fläche gegen die entsprechende Fläche der Lagerlasche andrückt, so dass die Reibkraft erhöht ist und eine Bremswirkung erreicht wird. Vorzugsweise ist die Anordnung so getroffen, dass sich lediglich die Lagerlasche des Trägers um die Hülse dreht, während alle anderen Bestandteile der Verbindung unverdrehbar gehalten sind. Die Einzelteile, die für die Ausbildung des Drehlagers und der Bremse erforderlich sind, können kostengünstig zur Verfügung gestellt werden, wobei auch die Anzahl der Einzelteile gering ist.

Um die Federkraft der Federscheibe und damit die Reibkraft zwischen den Reibpartnern einstellen zu können, ist vorgesehen, dass die Seitenfläche des Clips, an der sich die Federscheibe abstützt, zwei symmetrisch um die Lochung angeordnete einander diametral gegenüberliegende Keilschrägen aufweist und die Federscheibe diametral gegenüberliegend zwei wellenbergartige Erhebungen aufweist, die an die Keilschrägen anlegbar oder angelegt sind, sowie zwischen diesen radial innenliegend Vorsprünge aufweist, an denen sich der Kragen der Hülse abstützt.

Durch diese Ausbildung wird erreicht, dass sich die Federscheibe einerseits mit den radial innenliegenden Vorsprüngen am Kragen der Hülse abstützt. Andererseits wird durch die wellenbergartigen Erhebungen eine Stützfläche an der entsprechenden Seitenfläche des Clips zur Verfügung gestellt, wobei durch Drehung der Federscheibe die wellenbergartigen Erhebungen entweder neben den Keilschrägen angeordnet sein können, so dass die geringste Federkraft ausgeübt wird oder aber durch Drehung der Federscheibe gleiten die wellenbergartigen Erhebungen zunehmend auf die Keilschrägen auf, so dass die Federkraft einstellbar ist, die auf die Seitenfläche des Clips einwirkt, welche wiederum gegen die Seitenfläche der Lagerlasche der entsprechend zunehmenden Federkraft angedrückt wird.

Die einmal eingestellte Relativlage der Federscheibe bleibt auch bei Schwenkung der Lagerlasche beibehalten, verändert sich hierbei also nicht.

Um die Drehung der Federscheibe und damit die Einstellung der Reibkraft einfach durchführen zu können, ist vorgesehen, dass die Federscheibe radial nach außen vorragende Vorsprünge als Manipulationshilfe aufweist.

Die nach außen vorragenden Vorsprünge können vom Benutzer als Manipulationshilfe benutzt werden, um die Federscheibe in die gewünschte Relativlage zu drehen.

Um in einfacher Weise sicherzustellen, dass der Clip relativ zum gestellfest angeordneten Stützteil unverdrehbar ist, ist vorgesehen, dass der Clip mindestens eine gerade Randkante aufweist, die in Montagesolllage an einer dazu parallelen Anschlagleiste des Stützteils anliegt.

Insbesondere dann, wenn das Stützteil aus Kunststoff geformt ist, ist die Anformung einer entsprechenden Anschlagleiste in einfacher Weise zu realisieren. An dieser Anschlagleiste liegt die gerade Randkante des Clips an, so dass dieser bei Betätigung der Einrichtung nicht gegenüber dem Stützteil verdreht werden kann.

Um in einfacher Weise die Befestigung der Hülse an dem Stützteil zu realisieren und zudem eine unverdrehbare Anordnung der Hülse relativ zum Stützteil zu erreichen, ist vorgesehen, dass die Hülse an ihrem kragenlosen Ende federnde Rastnasen aufweist, die in Montagesolllage in Rastausnehmungen des Stützteils eingreifen.

Bei der Montage wird die Hülse lagerichtig zugeführt und durch die Lochung des Stützteiles montiert, bis die Rastnasen in am Stützteil ausgebildete Rastausnehmungen einfallen. Damit ist die Hülse sowohl axial gesichert als auch drehfest angeordnet, da die Rastausnehmungen eine Drehung der Hülse um ihre Achse ausschließen.

Um eine hohe Verschleißfestigkeit sicherzustellen, ist vorzugsweise vorgesehen, dass die Hülse aus Stahl besteht.

Bei der erfindungsgemäßen Gestaltung ist vorzugsweise das Stützteil ein Formteil aus Kunststoff, welches gestellfest befestigt ist. Der Träger samt Lagerlasche besteht vorzugsweise aus Metall. Der Clip besteht wiederum vorzugsweise aus Kunststoff, um die entsprechende Biegbarkeit unter der Kraft der Federscheibe zu gewährleisten und um die Reibkraft gegenüber der von dem Clip umgriffenen Lagerlasche zu erreichen. Die Federscheibe besteht aus Federstahl. Die Hülse besteht, wie schon ausgeführt, vorzugsweise aus Stahl.

Wesentliche Vorteile der Erfindung bestehen darin, dass die Lagerung der Mittelarmlehne nur wenige Bauteile benötigt. Durch den erfindungsgemäßen Aufbau in der Montagesolllage ist exakt definiert, welche Flächen aufeinander reiben. Dies ist die Innenfläche des Clips, die an der entsprechenden Seitenfläche der Lagerlasche anliegt. Die Reibkraft kann über die Reibpartner (Lagerlasche aus Stahl, Clips aus Kunststoff) sowie die einstellbare Federvorspannung gut eingestellt werden. Durch die aus Stahl bestehende Hülse wird eine hohe Tragfähigkeit der Axiallagerung sichergestellt.

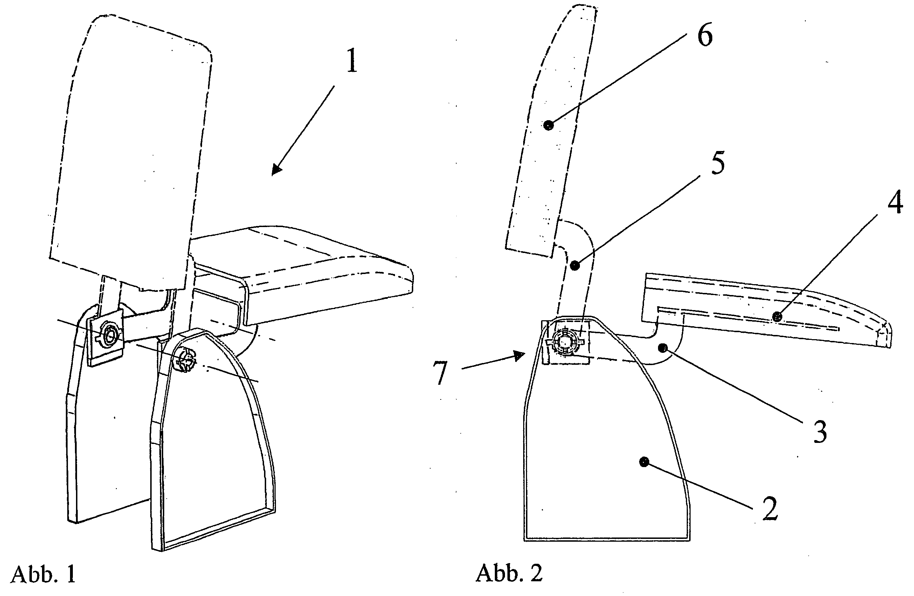

Ein Ausführungsbeispiel der Erfindung ist in der Zeichnung dargestellt und im Folgenden näher beschrieben.
- Es zeigt: Abbildung 1: ein Ausstattungsteil in Form einer Armlehne in zwei möglichen Benutzungsstellungen in Schrägansicht;
- Abbildung 2: desgleichen in Seitenansicht;
- Abbildung 3: einen vergrößerten Ausschnitt in Der Darstellung gemäß Figur 2 gesehen;
- Abbildung 4: ein Schnitt gemäß Schnittlinie A-A der Abbildung 3 gesehen;
- Abbildung 5: ein Detail in einer Vormontagelage;
- Abbildung 6: eine vergrößerte Einzelheit der Abbildung 5 in gleicher Ansicht;
- Abbildung 7: Teile in der Endmontagelage analog Abbildung 6 gesehen;
- Abbildung 8: Einzelheiten in vergrößerter Darstellung;
- Abbildung 9: ein komplett montiertes Ausstattungsteil in Schrägansicht;
- Abbildung 10: eine Einzelheit der Abbildung 9 in vergrößerter Ansicht.

In den Abbildungen ist ein Ausstattungsteil 1 für Kraftfahrzeuge gezeigt. Im Ausführungsbeispiel ist das Ausstattungsteil 1 eine Mittelarmlehne mit einem Polster 4 und einem entsprechenden Polsterträger mit einer Lagerlasche, die aus einem dünnwandigen Blechstreifen geformt ist. In einem gestellfest gehaltenen Stützteil 2 ist die Lagerlasche 3 schwenkbeweglich angeordnet. Im Ausführungsbeispiel weist das Ausstattungsteil zwei nebeneinander angeordnete Stützteile 2 und zwei Träger mit Lagerlaschen 3 auf. In Abbildung 2 beispielsweise sind die beiden Extremlagen des Ausstattungsteils 1 gezeigt. Mit Bezugsziffer 3 und 4 ist der Träger mit Lagerlasche und das Polster in der abgeschwenkten Position der Mittelarmlehne gezeigt. Mit den Bezugszeichen 5 und 6 sind die gleichen Teile in der hoch geschwenkten Lage gestrichelt gezeigt. Bei 7 ist die Position des Drehgelenks angegeben, um welches das Polster 4, 6 mit dem Träger 3 bzw. 5 schwenkbar ist.

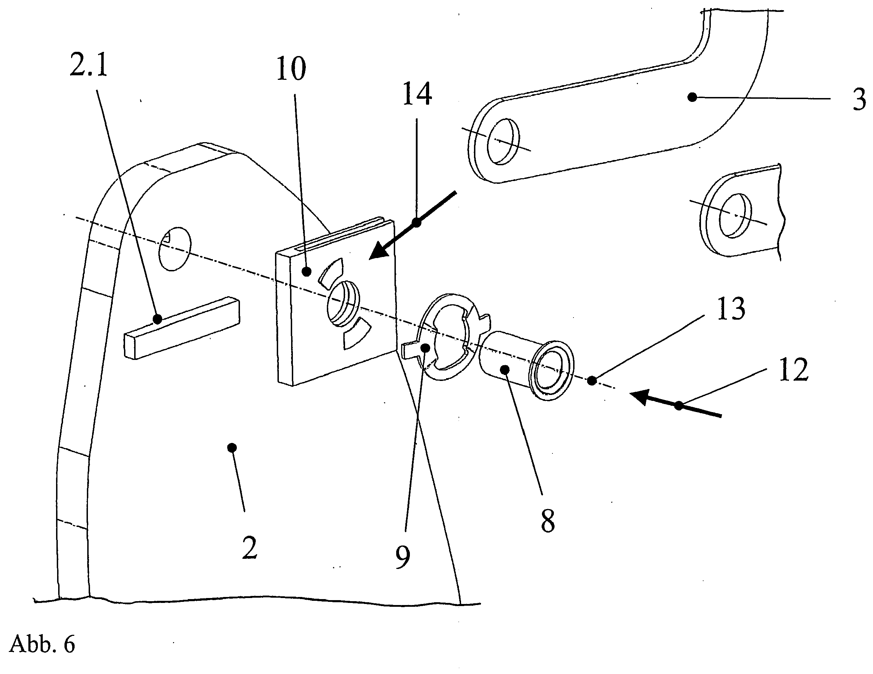

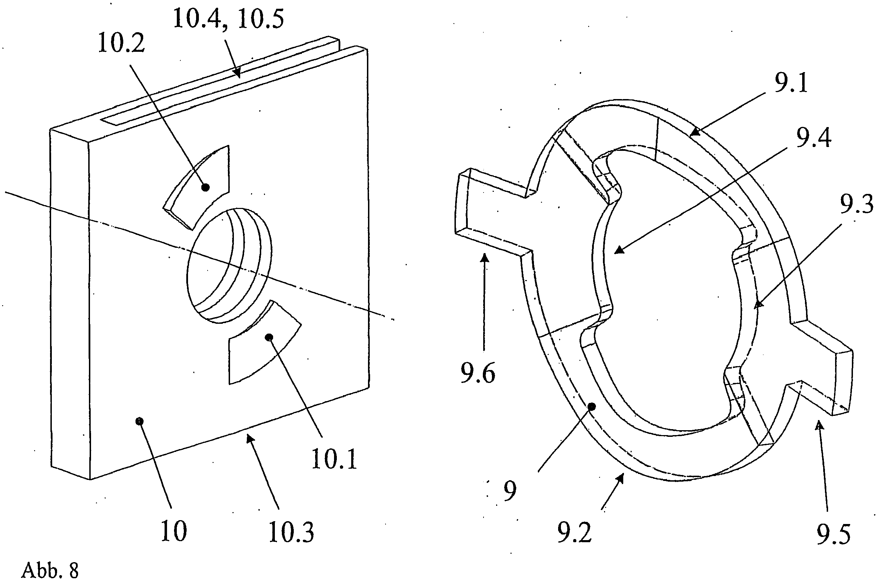

Der Träger 3 weist dabei endseitig eine gelochte Lagerlasche aus einem Materialstreifen auf. Auf diese Lagerlasche (3) wird ein gelochter Clip 10 aus Kunststoff aufgesteckt. Der Clip 10, der in Abbildung 6 beispielsweise in der Vormontagelage und in Abbildung 8 als Einzelheit gezeigt ist, liegt mit je einer Reibfläche 10.4 bzw. 10.5 an den einander gegenüberliegenden Seitenflächen der Lagerlasche 3 an. Zudem hat der Clip einen randoffenen Schlitz, um der Lagerlasche 3 den entsprechenden Freiraum beim Schwenken zur Verfügung zu stellen. Des Weiteren ist eine Hülse 8 als Befestigungsmittel vorgesehen, die mit ihrem Schaft die Lochungen der Lagerlasche 3 und des Clips 10 sowie eine Lochung des Stützteiles 2 durchgreift und die in Montagesolllage unverlierbar am Stützteil 2 gehalten ist. Die Hülse 8 weist an ihrem dem Stützteil 2 abgewandten Ende einen Kragen auf, der sich an einer gelochten Federscheibe 9 abstützt, die von der Hülse 8 durchgriffen ist und sich an der dem Stützteil 2 abgewandten Seitenflächen des Clips 10 abstützt. Die andere, gegenüberliegende Seitenfläche des Clips 10 liegt an einer Seitenfläche des Stützteiles 2 an. Der Clip 10 ist gegenüber dem Stützteil 2 um die durch die Hülse 8 gebildete Achse unverdrehbar angeordnet.

Die Seitenfläche des Clips 10, an der sich die Federscheibe 9 abstützt, weist zwei symmetrisch um die Lochung angeordnete, einander diametral gegenüberliegende Keilschrägen 10.1, 10.2 auf. Die Federscheibe 9 wiederum weist diametral gegenüberliegend zwei wellenbergartige Erhebungen 9.1, 9.2 auf, die in Montagesolllage an die Keilschrägen 10.1, 10.2 angelegt sind. In Umfangsrichtung gegenüber den wellenbergartigen Erhebungen 9.1, 9.2 um 90° versetzt sind zwei Vorsprünge 9.3, 9.4 vorgesehen, an denen sich der Kragen der Hülse 8 abstützt. Zusätzlich weist die Federscheibe 9 radial nach außen vorragende Vorsprünge 9.5, 9.6 als Manipulationshilfe auf. In der Montagesolllage kann die Federscheibe durch Manipulation an den Vorsprüngen 9.5, 9.6 um die durch die Hülse 8 gebildete Achse 13 gedreht werden, so dass die wellenbergartigen Erhebungen am Beginn der Keilschrägen 10.1, 10.2, in deren Mitte oder an deren Enden angeordnet sind, wodurch die Federvorspannung erhöht wird und die Federkraft, die auf die entsprechende Fläche des Clips 10 einwirkt, vergrößert wird, wodurch wiederum die Reibkraft des Clips 10 vergrößert wird, die auf die Lasche 3 einwirkt. Hierdurch kann die Bewegung des schwenkbeweglichen Teiles zu dem feststehenden Teil abgebremst werden und die Bremswirkung eingestellt werden.

Der Clip 10 weist mindestens eine gerade Randkante 10.3 auf, die in Montagesolllage an einer dazu parallelen Anschlagleiste 2.1 des Stützteiles 2 anliegt, so dass eine verdrehsichere Anordnung gewährleistet ist.

Zusätzlich weist die Hülse 8 an ihrem kragenlosen Ende federnde Rastnasen 17 auf, die in Montagesolllage in Rastausnehmungen 16 des Stützteiles 2 eingreifen. Hierdurch ist die Hülse 8 sowohl in axialer Richtung fixiert und gehalten, als auch unverdrehbar gegenüber dem Stützteil 2 gehalten, da die Rastnasen 17 in Verbindung mit den Rastausnehmungen 16 eine Drehung der Hülse 8 ausschließen.

Die Hülse 8 besteht vorzugsweise aus Stahl. Die Teile werden entsprechend der Darstellung gemäß Abbildung 6 in Richtung des Pfeiles 12 montiert, wobei zuvor die Lagerlasche 3 in den Spalt des Clips 10 entsprechend dem Pfeil 14 eingeschoben wird, so dass die Lochungen der Teile sämtlich koaxial zueinander ausgerichtet sind.

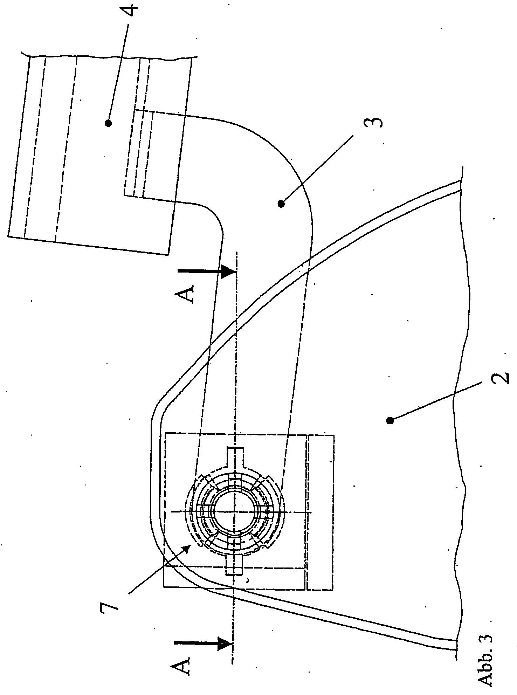

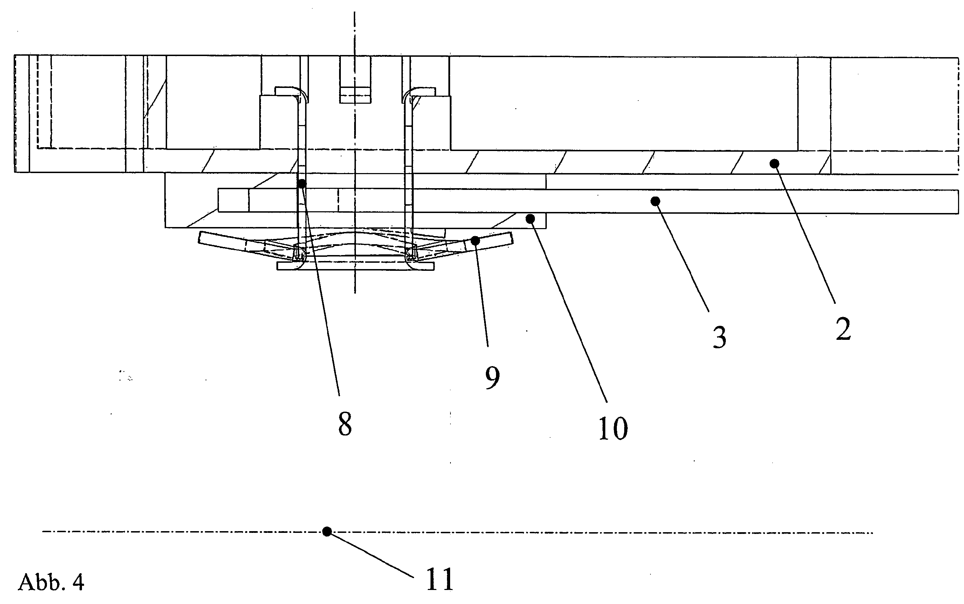

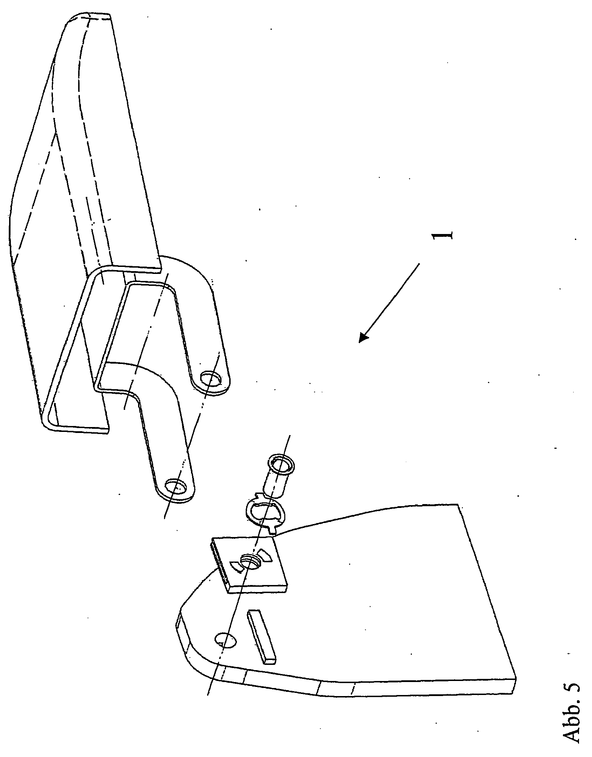

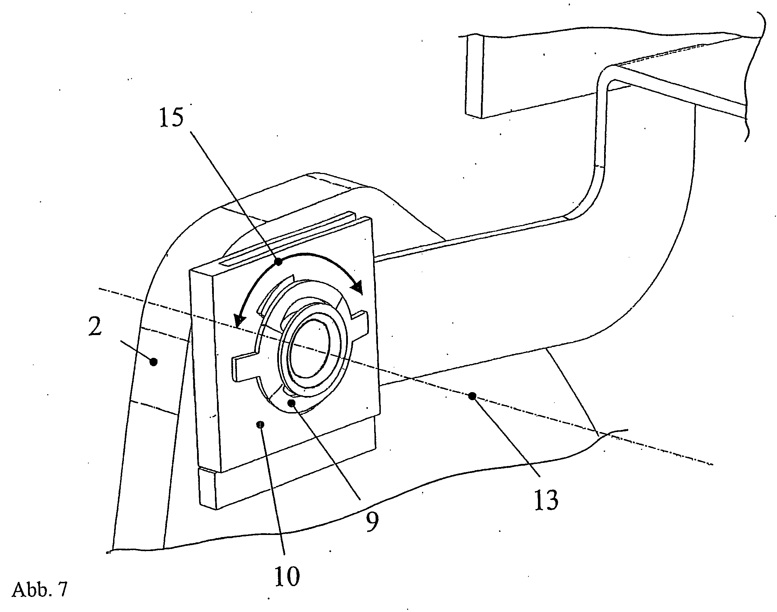

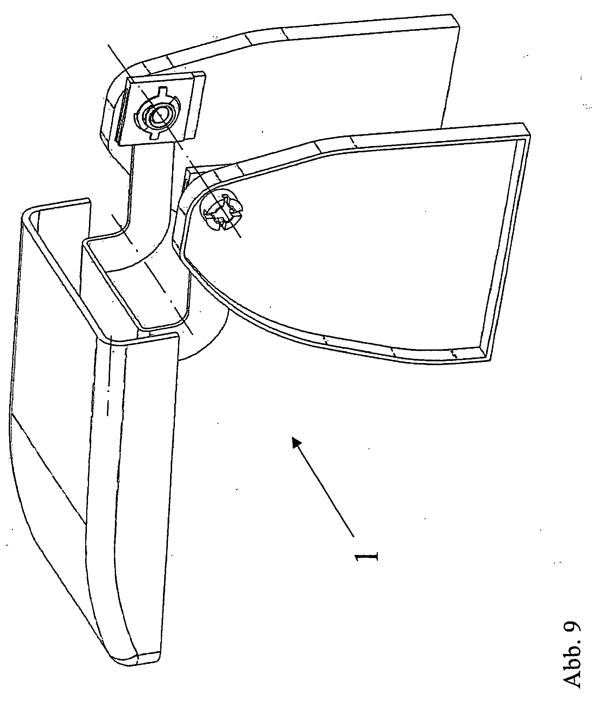

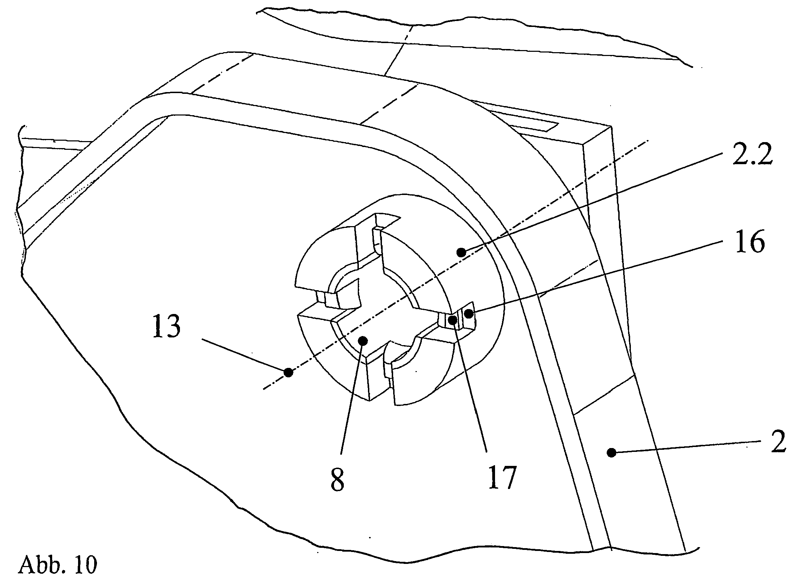

Während in Abbildung 1 und 2 nur die prinzipielle Anordnung dargestellt ist, ist in Abbildung 3 eine Einzelheit gezeigt, die wiederum in Abbildung 4 im Schnitt gezeigt ist, wobei die strichpunktierte Linie 11 die Mittellinie zwischen den beiden Stützteilen 2 gemäß Abbildung 1 darstellt. In Abbildung 5 ist eine Vormontagelage gezeigt, die in Abbildung 6 nochmals in vergrößertem Maßstab dargestellt ist, wobei aus dieser Anordnung die Montage und der Zusammenbau der Einzelelemente nachvollziehbar sind. In Abbildung 7 ist durch den Pfeil 15 gezeigt, wie die Federscheibe 9 durch Drehung um die Hülse 8 verstellt werden kann, um unterschiedliche Reibkräfte zwischen dem Clip 10 und der Lagerlasche 3 aufbauen zu können. In Abbildung 8 ist der Clip 10 und die Federscheibe 9 in vergrößertem Maßstab gezeigt. In Abbildung 9 ist nochmals ein fertig montiertes Ausstattungsteil gezeigt, während in der Abbildung 10 noch eine Einzelheit dargestellt ist. Im Ausführungsbeispiel ist die Ausbildung der Rastausnehmungen 16 an einem zylindrischen Vorsprung 2.2 des Stützteiles 2 vorgesehen. Und das Stützteil 2 ist in dieser Ausgestaltung als Kunststoffformteil ausgebildet. Auch die Ausbildung in Form eines Blechteils ist möglich.

Die Erfindung ist nicht auf das Ausführungsbeispiel beschränkt, sondern im Rahmen der Offenbarung vielfach variabel.

## Patentansprüche

1. Ausstattungsteil (1) für Kraftfahrzeuge mit mindestens einem gestellfest angeordneten Stützteil (2), an dem ein Träger des Ausstattungsteils schwenkbeweglich gehalten ist, wobei der Träger endseitig eine gelochte Lagerlasche (3) aus einem Materialstreifen aufweist, **dadurch gekennzeichnet, dass** auf die Lagerlasche (3) ein gelochter Clip (10) aus Kunststoff aufgesteckt ist, der mit je einer Reibfläche (10.4, 10.5) an den gegenüberliegenden Seitenflächen der Lagerlasche (3) anliegt und der einen randoffenen Schlitz mindestens im Schwenkbereich der Lagerlasche (3) aufweist, dass eine Hülse (8) als Befestigungsmittel vorgesehen ist, die mit ihrem Schaft die Lochungen der Lagerlasche (3) und des Clips (10) sowie eine Lochung des Stützteiles (2) durchgreift und in Montagesolllage unverlierbar am Stützteil (2) gehalten ist, wobei sich ein Kragen der Hülse (8) an einer gelochten Federscheibe (9) abstützt, die von der Hülse (8) durchgriffen ist und sich an der dem Stützteil (2) abgewandten Seitenfläche des Clips (10) abstützt, wobei die andere, gegenüberliegende Seitenfläche des Clips (10) an einer Seitenfläche des Stützteils (2) anliegt, und dass der Clip (10) gegenüber dem Stützteil (2) um die durch die Hülse (8) gebildete Achse (13) unverdrehbar angeordnet ist.

2. Ausstattungsteil nach Anspruch 1,
**dadurch gekennzeichnet, dass** die Seitenfläche des Clips (10), an der sich die Federscheibe (9) abstützt, zwei symmetrisch um die Lochung angeordnete einander diametral gegenüberliegende Keilschrägen (10.1, 10.2) aufweist und die Federscheibe (9) diametral gegenüberliegend zwei wellenbergartige Erhebungen (9.1, 9.2) aufweist, die an die Keilschrägen (10.1, 10.2) anlegbar oder angelegt sind, sowie zwischen diesen radial innenliegend Vorsprünge (9.3, 9.4) aufweist, an denen sich der Kragen der Hülse (8) abstützt.

3. Ausstattungsteil nach Anspruch 1 oder 2,
**dadurch gekennzeichnet, dass** die Federscheibe (9) radial nach außen vorragende Vorsprünge (9.5, 9.6) als Manipulationshilfe aufweist.

4. Ausstattungsteil nach einem der Ansprüche 1 bis 3,
**dadurch gekennzeichnet, dass** der Clip (10) mindestens eine gerade Randkante (10.3) aufweist, die in Montagesolllage an einer dazu parallelen Anschlagleiste (2.1) des Stützteils (2) anliegt.

5. Ausstattungsteil nach einem der Ansprüche 1 bis 4,
**dadurch gekennzeichnet, dass** die Hülse (8) an ihrem kragenlosen Ende federnde Rastnasen (17) aufweist, die in Montagesolllage in Rastausnehmungen (16) des Stützteils (2) eingreifen.

6. Ausstattungsteil nach einem der Ansprüche 1 bis 5,
**dadurch gekennzeichnet, dass** die Hülse (8) aus Stahl besteht.

## Claims

1. A piece of equipment (1) for motor vehicles with at least one support member (2) fixedly mounted at the frame, on said support member a carrier of the piece of equipment being pivotally held, the carrier having at its end a perforated bearing bracket (3) made of a material strip, **characterized by** that a perforated clip (10) made of plastic is fitted on the bearing bracket (3), said clip abutting with one friction surface (10.4, 10.5) each the opposite side surfaces of the bearing bracket (3) and having an open-edged slot at least in the pivot area of the bearing bracket (3), that a sleeve (8) is provided as a fastening means that penetrates with its shaft the perforations of the bearing bracket (3) and of the clips (10) and a perforation of the support member (2) and is captively held in the intended mounting position at the support member (2), a collar of the sleeve (8) being supported on a perforated spring washer (9) that is penetrated by the sleeve (8) and is supported on the side surface of the clip (10) opposite to the support member (2), the other opposite side surface of the clip (10) abutting a side surface of the support member (2), and that the clip (10) is disposed non-rotatably relative to the support member (2) about the axis (13) formed by the sleeve (8).

2. The piece of equipment according to claim 1, **characterized by** that the side surface of the clip (10), at which the spring washer (9) is supported, includes two diametrically opposite inclined wedge portions (10.1, 10.2) that are symmetrically arranged around the perforation, and the spring washer (9) includes two diametrically opposite wave-crest-like elevations (9.1, 9.2) that are placed or can be placed against the inclined wedge portions (10.1, 10.2), and radially inward projections (9.3, 9.4) therebetween, at which the collar of the sleeve (8) is supported.

3. The piece of equipment according to claim 1 or 2, **characterized by** that the spring washer (9) includes radially outwardly protruding projections (9.5, 9.6) as a manipulation aid.

4. The piece of equipment according to one of claims 1 to 3, **characterized by** that the clip (10) includes at least one straight border edge (10.3) that in the intended mounting position abuts a parallel stop strip (2.1) of the support members (2).

5. The piece of equipment according to one of claims 1 to 4, **characterized by** that the sleeve (8) has at its collarless end resilient latching nibs (17) that in the intended mounting position engage in latching recesses (16) of the support member (2).

6. The piece of equipment according to one of claims 1 to 5, **characterized by** that the sleeve (8) is made of steel.

## Revendications

1. Pièce de garnissage (1) pour véhicules automobiles avec au moins une pièce de soutien (2) fixée fermement sur le châssis, à la pièce de soutien un support de la pièce de garnissage étant maintenu pivotant, le support ayant à son extrémité une languette de palier (3) perforée en forme d'une bande de matière, **caractérisée en ce qu'**un clip (10) perforé en matière plastique est enfilé sur la languette de palier (3), le clip étant en appui avec une surface de friction (10.4, 10.5) chacune sur les surfaces latérales opposées de la languette de palier (3) et ayant une fente ouverte au bord au moins dans la zone de basculement de la languette de palier (3), qu'un manchon (8) est prévu comme moyen de fixation qui traverse avec sa tige les perforations de la languette de palier (3) et du clip (10) et une perforation de la pièce de soutien (2) et est maintenu prisonnier dans la position de montage de consigne à la pièce de soutien (2), une collerette du manchon (8) étant en appui sur un disque ressort (9) perforé qui est traversé par le manchon (8) et est en appui sur la surface latérale du clip (10) opposée à la pièce de soutien (2), l'autre surface latérale opposée du clip (10) étant en appui sur une surface latérale de la pièce de soutien (2), et que le clip (10) est monté de façon non rotative par rapport à la pièce de soutien (2) autour de l'axe (13) formé par le manchon (8).

2. Pièce de garnissage selon la revendication 1, **caractérisée en ce que** la surface latérale du clip (10), sur laquelle le disque ressort (9) est en appui, comporte deux pièces (10.1, 10.2) diamétralement opposées en forme de coin, qui sont positionnées avec symétrie autour de la perforation, et le disque ressort (9) comporte deux sommets (9.1, 9.2) diamétralement opposés en forme de crêtes de vague qui sont positionnés ou peuvent être positionnés contre les pièces (10.1, 10.2) en forme de coin, et des saillies (9.3, 9.4) radialement intérieures entre celles-ci, sur lesquelles la collerette du manchon (8) est en appui.

3. Pièce de garnissage selon la revendication 1 ou 2, **caractérisée en ce que** le disque ressort (9) comporte des saillies (9.5, 9.6) s'étendant radialement vers l'extérieur comme aide de manipulation.

4. Pièce de garnissage selon une des revendications 1 à 3, **caractérisée en ce que** le clip (10) comporte au moins un bord (10.3) droit qui dans la position de montage de consigne est en appui sur une baguette de butée (2.1) parallèle de la pièce de soutien (2).

5. Pièce de garnissage selon une des revendications 1 à 4, **caractérisée en ce que** le manchon (8) a à son extrémité sans collerette des becs d'accrochage (17) élastiques qui dans la position de montage de consigne s'engrènent dans des cavités d'accrochage (16) de la pièce de soutien (2).

6. Pièce de garnissage selon une des revendications 1 à 5, **caractérisée en ce que** le manchon (8) est en acier.
